# EUROPÄISCHE PATENTSCHRIFT

(11) **EP 1 156 183 B1**
(45) Veröffentlichungstag und Bekanntmachung des Hinweises auf die Patenterteilung: **01.09.2004**
(21) Anmeldenummer: 01105688.4
(22) Anmeldetag: 07.03.2001
(51) Int. Cl.: E21B 17/00, F16L 9/18, F16L 9/147, E21B 17/18

(54) **Doppelwandbohrrohr**
Double-walled drill pipe
Tube de forage à double paroi

(30) Priorität: 17.05.2000 DE 20008887 U
(43) Veröffentlichungstag der Anmeldung: 21.11.2001
(73) Patentinhaber: BAUER Maschinen GmbH, 86529 Schrobenhausen (DE)
(72) Erfinder: Weixler, Leonhard, 86672 Tierhaupten (DE)
(74) Vertreter: Wunderlich, Rainer, Dipl.-Ing.

(56) Entgegenhaltungen:
- EP-A- 0 361 639
- DE-A- 19 932 053
- FR-A- 2 169 503
- GB-A- 1 553 220
- GB-A- 2 265 200
- US-A- 2 839 272
- US-A- 3 581 775
- US-A- 3 786 878
- US-A- 5 629 062
- US-A- 5 868 437

## Beschreibung

Die Erfindung betrifft ein Bohrrohr für ein Lufthebeverfahren mit mindestens einem Rohrabschnitt mit zwei Enden sowie daran angeordneten Anschlussstücken, welche aus einem metallischen Material gefertigt sind.

Solche Bohrrohre werden zum Tiefbohren, beispielsweise von Brunnen mit Tiefen bis zu 1000 m, verwendet. Um einen ausreichenden Bohrvortrieb zu ermöglichen, sind genügend große Querschnitte für die Förderung notwendig. Üblich sind hierbei Durchmesser im Bereich von 100 bis 300 mm. Wegen der großen Bohrtiefen ergeben sich außerordentlich hohe Gestängegewichte und entsprechend große Hakenlasten für die Brunnenbohrgeräte. Da die Brunnenbohrgeräte häufig auch in unwegsamem Gelände arbeiten müssen und entsprechend leicht und mobil ausgeführt sind, stellt das hohe Gewicht der Lufthebegestänge eine erhebliche Behinderung dar. Je größer der Durchmesser des zu bohrenden Lochs und je tiefer gebohrt werden muss, desto größer und schwerer muss folglich die Brunnenbohranlage sein und desto stärker ist gleichzeitig auch deren Mobilität und deren Einsatzbereich eingeschränkt.

In der DE 689 24 317 T2, in welcher ein Bohrrohr offenbart ist, wird vorgeschlagen, zur Gewichtsersparnis den gesamten Rohrabschnitt aus faserverstärktem Kunststoff zu fertigen. Aufgrund der geringen Abrasionsbeständigkeit des die Fasern umhüllenden Harzmaterials sind die in der DE 689 24 317 T2 beschriebenen Bohrrohre nicht für den Einsatz im sogenannten Lufthebeverfahren geeignet. Bei diesem beispielsweise aus der US 2,839,272 bekannten Verfahren wird das Bohrgut im Inneren des Bohrrohres, welches dann auch als Lufthebegestänge bezeichnet werden kann, durch nach oben strömende Luft mitgenommen. Hierbei ist die Innenseite des Bohrrohrs der abrasiven Wirkung des Bohrguts ausgesetzt.

Die GB 1 553 220 beschreibt ein Rohr zur Verwendung in einem Marine Riser. Das Rohr weist mehrere Lagen eines faserverstärkten Plastikmaterials auf und kann innen mit einer Schicht eines flüssigkeitsundurchlässigen Materials belegt sein. Innenseitig an der flüssigkeitsundurchlässigen Materialschicht kann wiederum eine abrasionsbeständige Schicht aus einem harzgetränkten Glasgewebe angeordnet sein.

Die US 5,629,062 lehrt ein faserverstärktes Plastikrohr, dessen Aussenseite zur Verbesserung der Oberflächenhärte und der Abrasionsbeständigkeit mit einem Metallüberzug versehen ist.

Die US 5,868,437 beschreibt ein Verbundrohr, bestehend aus einem Innenrohr aus Glas und einem Außenrohr aus Stahl.

Die US 3,581,775 offenbart eine mehrschichtig aufgebaute, flexible Stahlleitung für Fluide unter Druck und hoher Geschwindigkeit. Ein inneres Element, das bei Fluiddurchleitung einem Verschleiß unterliegt, ist dabei austauschbar ausgestaltet.

**Aufgabe** der Erfindung ist es, ein Bohrrohr zu schaffen, mit welchem der Einsatzbereich von mobilen Brunnenbohranlagen erheblich erweitert wird und welches beim Einsatz im Lufthebeverfahren eine besonders lange Lebensdauer aufweist.

Die Lösung dieser Aufgabe gelingt durch ein Bohrrohr mit den Merkmalen des Anspruches 1.

Vorteilhafte Weiterbildungen des erfindungsgemäßen Bohrrohres sind in den Unteransprüchen angegeben.

Ein Bohrrohr der oben angegebenen Art ist durch die Erfindung unter anderem dadurch weitergebildet, dass das Innenrohr aus einem anderen Material als das Außenrohr gefertigt ist und dass eine innere Oberfläche des Innenrohrs abrasionsbeständig ausgebildet ist. Der Rohrabschnitt weist dabei mindestens ein Außenrohr mit Kohlefaserverbundwerkstoffen und mindestens ein darin angeordnetes Innenrohr auf.

Eine Kernidee der Erfindung kann darin gesehen werden, dass der Rohrabschnitt nicht mehr durchgängig aus einem einheitlichen Material gefertigt ist, sondern dass entsprechend der im Bohrbetrieb zu erwartenden Beanspruchung der jeweiligen Teile und den Stabilitätsanforderungen unterschiedliche Materialien verwendet werden.

Das erfindungsgemäße Bohrrohr ist durch die abrasionsbeständige Ausbildung der inneren Oberfläche des Innenrohrs für den Einsatz im Lufthebeverfahren geeignet. Eine besonders lange Standzeit des Rohrabschnitts und damit des Bohrrohrs wird gemäß einer ersten Alternative der Erfindung dadurch erzielt, dass das Innenrohr aus einem metallischen Werkstoff oder aus einem abrasionsbeständigen Kunststoff gefertigt ist.

Bei dem metallischen Werkstoff kann es sich z.B. um Stahl handeln; als Kunststoff kann beispielsweise ein Gummi, insbesondere ein Hartgummi verwendet werden.

Zur Erzielung eines besonders leichten Bohrrohrs ist es bevorzugt, das Außenrohr vollständig aus Kohlefaserverbundwerkstoffen zu fertigen. Man erhält dann ein Bohrgestänge, welches besonders leicht handhabbar ist.

Gemäß der Erfindung ist das Innenrohr radial beabstandet vom Außenrohr und insbesondere konzentrisch innerhalb des Außenrohres angeordnet. Bei einem solchen Bohrrohr, das auch als Doppelwandbohrrohr oder Doppelwandgestänge bezeichnet werden kann, bleibt zwischen Innen- und Außenrohr ein radialer Spalt, durch den bei Verwendung im Lufthebeverfahren die Luft nach unten gefördert werden kann.

Um die Lebensdauer des Bohrrohrs zu erhöhen, kann weiterhin auch eine Außenseite des Außenrohrs mit einer abrasionsbeständigen Schutzschicht versehen sein. Eine solche Schutzschicht kann wiederum aus einem metallischen Werkstoff, beispielsweise Stahl, oder einem abrasionsbeständigen Kunststoff wie etwa Gummi oder Hartgummi bestehen.

Eine solche Schutzschicht ist insbesondere dann zweckmäßig, wenn die Bohrvorrichtung, in welcher das Bohrrohr eingesetzt ist, nicht freischneidend ausgebildet ist, d.h. wenn die äußere Oberfläche des Außenrohrs während des Bohrbetriebs mit den umgebenden Wänden des Bohrlochs in Berührung kommen kann.

Wenn ein Bohrrohr als Einfachgestänge im Lufthebeverfahren eingesetzt werden soll, ist es zweckmäßig, wenn zur Förderung der Luft nach unten zusätzlich mindestens ein außerhalb des Außenrohrs verlaufendes Luftrohr vorgesehen ist.

Das Innenrohr kann auch stoffschlüssig mit dem Außenrohr verbunden sein. Beispielsweise können Innen- und Außenrohr miteinander verklebt sein. Dadurch werden die mechanischen Eigenschaften des Bohrrohrs, insbesondere dessen Torsionssteifigkeit erheblich verbessert.

Da Kohlefaserverbundwerkstoffe besonders hohe Kräfte längs der Fasern aufnehmen können, ist es zur Erzielung eines besonders torsionssteifen Bohrrohrs weiterhin bevorzugt, dass das Außenrohr aus einem schraubenartig gewickelten Kohlefaserbandmaterial gefertigt ist. Hierbei ist es insbesondere zweckmäßig, das Kohlefaser-Bandmaterial entgegen der Bohrdrehrichtung zu wickeln. Wird beispielsweise in Uhrzeigerrichtung gebohrt, so wird das Kohlefaser-Bandmaterial als "Linksschraube" gewickelt.

Das Innenrohr muss aber nicht mit dem Außenrohr fest verbunden sein. Es kann im Gegenteil auch wünschenswert sein, dass das Innerohr lösbar in dem Außenrohr aufgenommen ist. Dies ist beispielsweise dann zweckmäßig, wenn das geförderte Bohrgut sehr abrasiv ist und das Innenrohr nach einer gewissen Standzeit ausgetauscht werden muss. Es können dann zur Fixierung des Innenrohrs innerhalb des Außenrohrs Befestigungselemente vorgesehen sein. Diese Befestigungselemente können als an den Enden des Rohrabschnitts angeordnete Klemmelemente, insbesondere als Klemmringe ausgebildet sein.

Die Anschlussstücke dienen zur Verbindung mehrerer Bohrrohre miteinander, zur Verbindung des Bohrrohrs mit einer Antriebseinrichtung oder mit einem Bohr- oder Schneidkopf.

Dies wird bevorzugt dadurch erreicht, dass die Anschlussstücke einen Gewindeanschluss oder einen Flansch aufweisen.

Zur Übertragung des zum Bohren notwendigen Drehmoments über das Bohrrohr kommt einer drehfesten Verbindung zwischen den Anschlussstücken und dem Rohrabschnitt eine große Bedeutung zu.

Eine äußerst torsionssteife Verbindung kann dadurch erzielt werden, dass das Außenrohr mit den Anschlussstücken verklebt ist. Hierzu kann bevorzugt ein Polymerklebstoff, wie beispielsweise ein Zwei-Komponenten-Kleber verwendet werden.

Im Folgenden wird die Erfindung anhand der in der Zeichnung schematisch dargestellten Ausführungsbeispiele näher erläutert.

Hierin zeigen:
- Fig. 1: einen Teillängsschnitt einer ersten Ausführungsform eines Bohrrohrs und
- Fig. 2: einen Teillängsschnitt einer erfindungsgemäßen zweiten Ausführungsform eines Bohrrohrs.

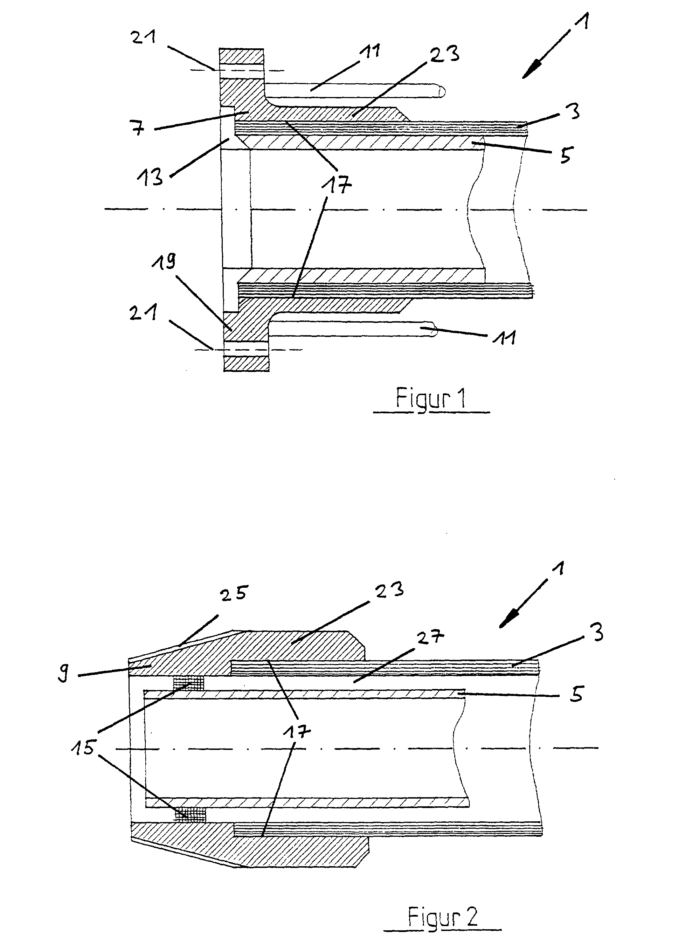

Fig. 1 zeigt ein Bohrrohr 1, bei welchem ein Innenrohr 5, welches hier als Auskleidung dient, formschlüssig und lösbar in ein Außenrohr 3 aus Kohlefaserverbundwerkstoffen aufgenommen ist. Dargestellt ist der Bereich eines Endes eines Rohrabschnitts, an welchem ein Anschlussstück 7 angeordnet ist. Zur Verbindung des Bohrrohrs 1 mit weiteren, gegebenenfalls gleichartigen Bohrrohren, weist das Anschlussstück 7 einen mit mehreren Bohrungen 21 versehenen Flansch 19 auf. Außerdem ist das Anschlussstück 7 mit einer zylindrischen Ansatzhülse 23 versehen, welche mit dem Außenrohr 3 über Klebefugen 17 torsionssteif verbunden ist.

Es handelt sich bei dem dargestellten Bohrrohr 1 um ein Einfachgestänge, in dessen Innerem beim Einsatz im Lufthebeverfahren das Bohrgut nach oben transportiert wird. Zur Beförderung der dazu notwendigen Luftvolumina nach unten sind radial außerhalb des Außenrohrs 3 im hier gezeigten Ausführungsbeispiel am Flansch 19 angeordneten Luftrohre 11 vorgesehen.

Um das Innenrohr gegen ein axiales Verrutschen relativ zum Außenrohr zu sichern, ist an einer Stirnseite des Außenrohrs 3 und des Innenrohrs 5 ein Klemmring 13 angebracht, welcher durch in der Zeichnung nicht dargestellte Schrauben mit dem Anschlussstück 7 verbunden ist. Ein Austausch des Innenrohrs 5 kann in leichter Weise durch Abschrauben des Klemmrings, axiales Entnehmen des abgenutzten Innenrohrs 5 und Einsetzen eines neuen Innenrohrs 5 erfolgen.

Fig. 2 zeigt in einem Teillängsschnitt ein erfindungsgemäßes zweites Ausführungsbeispiel eines Bohrrohres 1. Äquivalente Teile sind hier mit denselben Bezugszeichen wie in Fig. 1 versehen. Es ist wiederum der Bereich eines Endes eines Rohrabschnitts des Bohrrohrs 1 mit einem Anschlussstück 9 dargestellt. Das Bohrrohr 1 ist als Doppelwandgestänge zum Einsatz im Lufthebeverfahren ausgebildet, d.h. ein Innenrohr 5 ist radial beabstandet und konzentrisch innerhalb eines Außenrohrs 3 angeordnet. Das Innenrohr ist hierbei aus einem metallischen Werkstoff oder einem abrasionsbeständigen Kunststoff, wie etwa Hartgummi gefertigt. Zur Fixierung des Innenrohrs 5 innerhalb des Außenrohrs 3 sind mehrere Klemmelemente 15 vorgesehen, welche zwischen Außenrohr 3 und Innenrohr 5 eingesetzt sind. Ein zwischen Außenrohr 3 und Innenrohr 5 verbleibender radialer Spalt 27 dient zur Förderung der Luft nach unten. Das Anschlussstück 9 ist zur Verbindung mit weiteren Komponenten, wie Bohrrohre, Bohrkopf, Schneidkopf oder Antriebseinrichtung, mit einem konischen Gewinde 25 versehen.

Die in den Figuren 1 und 2 dargestellten Ausführungsbeispiele des Bohrrohrs zeichnen sich durch hervorragende mechanische Eigenschaften, insbesondere durch eine hohe Torsionssteifigkeit bei gleichzeitig geringem Gewicht aus. Gleichzeitig weisen die Bohrrohre beim Einsatz im Lufthebeverfahren eine besonders lange Standzeit auf.

## Patentansprüche

1. Bohrrohr für ein Lufthebeverfahren, mit mindestens einem Rohrabschnitt mit zwei Enden, sowie daran angeordneten Anschlussstücken (7, 9), welche aus einem metallischen Material gefertigt sind,
**dadurch gekennzeichnet,**
**dass** der Rohrabschnitt mindestens ein Außenrohr (3) mit Kohlefaserverbundwerkstoffen und mindestens ein darin angeordnetes Innenrohr (5) aufweist, das aus einem anderen Material als das Außenrohr (3) gefertigt ist und radial beabstandet vom Außenrohr (3) angeordnet ist, wobei das Innenrohr (5) mit seiner inneren Oberfläche abrasionsbeständig aus einem metallischen Werkstoff oder aus einem abrasionsbeständigen Kunststoff, insbesondere Gummi, ausgebildet ist.

2. Bohrrohr nach Anspruch 1,
**dadurch gekennzeichnet,**
**dass** das Innenrohr (5) konzentrisch innerhalb des Außenrohrs angeordnet ist.

3. Bohrrohr nach einem der vorhergehenden Ansprüche,
**dadurch gekennzeichnet,**
**dass** das Außenrohr (3) aus einem schraubenartig gewickelten Kohlefaserbandmaterial gefertigt ist.

4. Bohrrohr nach einem der vorhergehenden Ansprüche,
**dadurch gekennzeichnet,**
**dass** eine Außenseite des Außenrohrs (3) mit einer abrasionsbeständigen Schutzschicht versehen ist.

5. Bohrrohr nach einem der vorhergehenden Ansprüche,
**dadurch gekennzeichnet,**
**dass** zusätzlich mindestens ein außerhalb des Außenrohrs (3) verlaufendes Luftrohr (11) vorgesehen ist.

6. Bohrrohr nach einem der vorhergehenden Ansprüche,
**dadurch gekennzeichnet,**
**dass** zur Fixierung des Innenrohrs (5) innerhalb des Außenrohrs (3) Befestigungselemente vorgesehen sind.

7. Bohrrohr nach Anspruch 6,
**dadurch gekennzeichnet,**
**dass** die Befestigungselemente als an den Enden des Rohrabschnitts angeordnete Klemmelemente, insbesondere als Klemmringe (13), ausgebildet sind.

8. Bohrrohr nach einem der vorhergehenden Ansprüche,
**dadurch gekennzeichnet,**
**dass** das Außenrohr (3) mit den Anschlussstücken (7, 9) verklebt ist.

9. Bohrrohr nach einem der vorhergehenden Ansprüche,
**dadurch gekennzeichnet,**
**dass** die Anschlussstücke (7, 9) einen Gewindeanschluss oder einen Flansch aufweisen.

## Claims

1. Drill pipe for an air-lift method comprising at least one pipe section with two ends and connecting pieces (7, 9) arranged thereon, which are produced of a metallic material,
**characterized in that**
the pipe section has at least one outer pipe (3) comprising carbon fibre composites and at least one inner pipe (5) arranged therein, which is produced of a different material than the outer pipe (3) and spaced from the outer pipe (3) in the radial direction, the inner pipe (5) being designed at its internal surface in an abrasion-resistant manner of a metallic material or an abrasion-resistant plastic, in particular rubber.

2. Drill pipe according to claim 1,
**characterized in that**
the inner pipe (5) is arranged concentrically inside the outer pipe.

3. Drill pipe according to any one of the preceding claims,
**characterized in that**
the outer pipe (3) is produced of a helicoidally wound carbon fibre tape material.

4. Drill pipe according to any one of the preceding claims,
**characterized in that**
an external surface of the outer pipe (3) is provided with an abrasion-resistant protective layer.

5. Drill pipe according to any one of the preceding claims,
**characterized in that**
in addition at least one air pipe (11) is provided which extends outside the outer pipe (3).

6. Drill pipe according to any one of the preceding claims,
**characterized in that**
fixing elements are provided inside the outer pipe (3) in order to fix the inner pipe (5).

7. Drill pipe according to claim 6,
**characterized in that**
the fixing elements are designed as clamping elements, in particular as clamping rings (13), that are arranged at the ends of the pipe section.

8. Drill pipe according to any one of the preceding claims,
**characterized in that**
the outer pipe (3) is bonded to the connecting pieces (7, 9).

9. Drill pipe according to any one of the preceding claims,
**characterized in that**
the connecting pieces (7, 9) have a threaded pipe connection or a flange.

## Revendications

1. Tube de forage pour un procédé d'émulsification à air comprimé, avec au moins une section de tube ayant deux extrémités, ainsi que des éléments de raccordement (7, 9) montés sur celles-ci, qui sont fabriqués dans un matériau métallique, ***caractérisé en ce que*** la section de tube présente au moins un tube extérieur (3) avec des matériaux composites en fibres de carbone et au moins un tube intérieur (5) placé à l'intérieur de celui-ci, qui est fabriqué dans un autre matériau que le tube extérieur (3) et est placé à distance radiale du tube extérieur (3), le tube intérieur (5) étant réalisé avec sa surface intérieure, d'une manière qui résiste à l'abrasion, dans un matériau métallique ou dans une matière plastique résistant à l'abrasion, en particulier du caoutchouc.

2. Tube de forage selon la revendication 1, ***caractérisé en ce que*** le tube intérieur (5) est placé de façon concentrique à l'intérieur du tube extérieur.

3. Tube de forage selon l'une quelconque des revendications précédentes, ***caractérisé en ce que*** le tube extérieur (3) est fabriqué dans un matériau en bandes de fibres de carbone enroulées en spirale.

4. Tube de forage selon l'une quelconque des revendications précédentes, ***caractérisé en ce qu'***une face extérieure du tube extérieur (3) est munie d'une couche protectrice résistant à l'abrasion.

5. Tube de forage selon l'une quelconque des revendications précédentes, ***caractérisé en ce qu'***il est prévu en plus au moins un tube (11) à air s'étendant à l'extérieur du tube extérieur (3).

6. Tube de forage selon l'une quelconque des revendications précédentes, ***caractérisé en ce que,*** pour la fixation du tube intérieur (5) dans le tube extérieur (3), il est prévu des éléments de fixation.

7. Tube de forage selon la revendication 6, ***caractérisé en ce que*** les éléments de fixation sont conformés en éléments de serrage placés aux extrémités de la section de tube, en particulier en bagues de serrage (13).

8. Tube de forage selon l'une quelconque des revendications précédentes, ***caractérisé en ce que*** le tube extérieur (3) est collé aux éléments de raccordement (7, 9).

9. Tube de forage selon l'une quelconque des revendications précédentes, ***caractérisé en ce que*** les éléments de raccordement (7, 9) présentent un raccord fileté ou une bride.
